# EUROPEAN PATENT SPECIFICATION

(11) **EP 3 820 009 B1**
(45) Date of publication and mention of the grant of the patent: **05.07.2023**
(21) Application number: 19904029.6
(22) Date of filing: 06.12.2019
(51) Int. Cl.: H02H 9/04, H02H 3/087, H02H 7/18, H02J 7/00, B60L 3/04, H01H 39/00

(54) **PROTECTION SYSTEM**
SCHUTZSYSTEM
SYSTÈME DE PROTECTION

(30) Priority: 25.12.2018 JP 2018240948
(43) Date of publication of application: 12.05.2021
(73) Proprietor: Suncall Corporation, Kyoto-shi, Kyoto 615-8555 (JP)
(72) Inventor: MURAKAMI, Kenji, Kyoto-shi, Kyoto 615-8555 (JP); MUGISHIMA, Akio, Kyoto-shi, Kyoto 615-8555 (JP)
(74) Representative: Hoffmann Eitle
(86) International application number: PCT/JP2019/047854
(87) International publication number: WO 2020/137452

(56) References cited:
- EP-A1- 2 811 548
- WO-A1-2015/049997
- DE-A1-102012 214 835
- JP-A- 2011 200 066
- US-A1- 2011 234 127

## Description

### Technical Field

The present invention relates to a protection system, and in particular, a protection system capable of suppressing energy generated when a shunt resistor used in measuring the value of current in a current path flowing from a battery for high-voltage applications to a motor that are used in, for example, electric vehicles (EVs), hybrid vehicles (HVs), and plug-in hybrid vehicles (PHVs) is cut by a pyro-switch based on a predetermined condition.

### Background Art

There is known a pyro-switch which cuts off a circuit when a short circuit or an overcurrent is detected in the circuit (for example, see Patent Document 1). This kind of pyro-switch is provided also in vehicles such as electric vehicles (EVs), hybrid vehicles (HVs), and plug-in hybrid vehicles (PHVs).

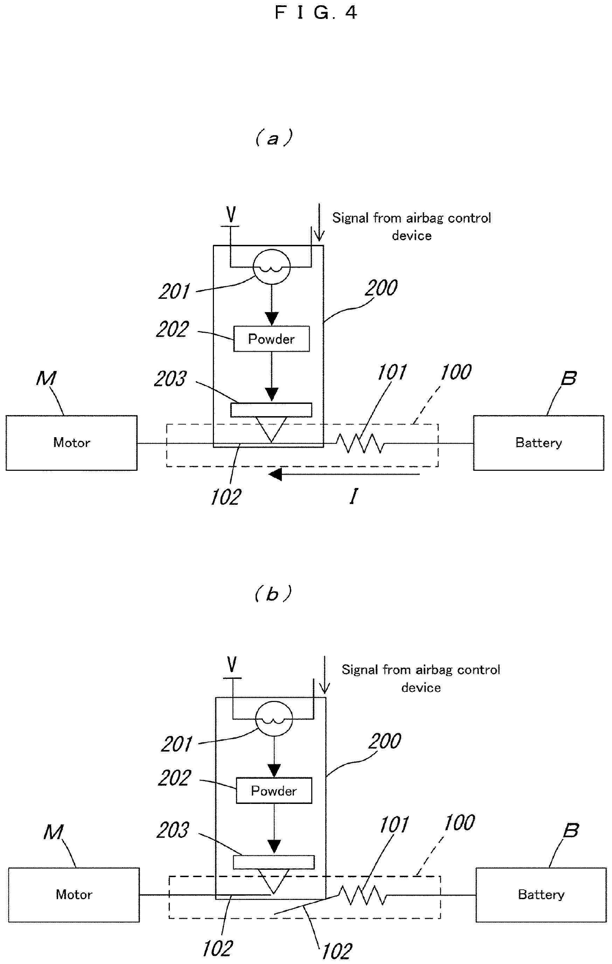

In this regard, the conventional system will be described specifically with reference to FIG. 4. As shown in FIG. 4A, a shunt resistor 100 used in measuring the current value of current I flowing from a battery B to a motor M that are provided in a vehicle is connected between the battery B and the motor M. The shunt resistor 100 is mainly composed of a resistive element 101 and a base material 102 (so-called busbar) made of a metal such as copper. A pyro-switch 200 is provided on the base material 102 of such a shunt resistor 100 as shown in FIG. 4A. The pyro-switch 200 is composed of a heater ignition unit 201 for receiving a signal from an airbag control device operating by detecting a collision at the time of a vehicle accident, powder 202 exploding by actuation of the heater ignition unit 201, a cutting unit 203 for cutting the base material 102 of the shunt resistor 100 by the exploded powder 202 as shown in FIG. 4B. A power supply V for operating the heater ignition unit 201 is connected to the heater ignition unit 201.

By providing the pyro-switch 200 in the vehicle in this way, the wiring of the battery B can be safely disconnected, triggered by a signal from the airbag control device that operates by detecting a collision at the time of a vehicle accident. That is, when damage such as a disconnection or a short circuit of the wiring of the battery B as a result of deformation of the vehicle is caused at the time of a vehicle accident, a large current flows and the possibility of secondary damage such as heat generation, ignition, etc., of the wiring and the battery B is increased. However, such a possibility can be prevented by thus providing the pyro-switch 200 and cutting the base material 102 of the shunt resistor 100.

### Citation List

### Patent Document

Patent Document 1: Japanese Translation of International Application (Kohyo) No. 2003-534523

### Summary of the Invention

### Technical Problem

However, there is a problem that when the base material 102 of the shunt resistor 100 is cut by the pyro-switch 200 to disconnect the wiring of the battery B, energy stored in the inductance of the wiring and the components of the battery B may cause a high voltage, resulting in sparks, and leading to destruction and burnout of the battery B and peripheral devices.

Accordingly, in view of the above problem, an object of the present invention is to provide a protection system capable of suppressing energy generated when wiring of the battery is disconnected using a pyro-switch. Solution to the Problem

The foregoing object of the present invention is achieved by the following means. It is noted that reference signs of an embodiment to be described later are added in parentheses, but the present invention is not limited thereto.

According to the first aspect of the present invention, a protection system is characterized by including a shunt resistor (100) for measuring a value of current flowing from a battery (B) to a load unit (for example, a motor M),
a pyro-switch (200) for cutting the shunt resistor (100) based on a predetermined signal, and
a suppression unit (2) connected between the shunt resistor (100) and the load unit (for example, the motor M),
wherein the suppression unit (2) suppresses energy generated by cutting the shunt resistor (100) by the pyro-switch (200).

According to the second aspect of the present invention, the protection system according to the above first aspect is characterized in that the suppression unit (2) is composed of a diode (20), and
the diode (20) has a cathode side (20a) connected between the shunt resistor (100) and the load unit (for example, the motor M), and
the diode (20) has an anode side (20b) connected to the load unit (for example, the motor M).

### Advantageous Effects of the Invention

Next, advantageous effects of the present invention will be described with reference signs in the drawings. It is noted that reference signs of an embodiment to be described later are added in parentheses, but the present invention is not limited thereto.

According to the first aspect of the present invention, the suppression unit (2) for suppressing energy generated by cutting the shunt resistor (100) by the pyro-switch (200) is connected between the shunt resistor (100) and the load unit (for example, the motor M). As a result, when the shunt resistor (100) is cut, the high voltage on the load unit (for example, the motor M) side caused by energy stored in the inductance of the wiring and the components of the battery (B) can be suppressed.

Thus, according to the present invention, the energy generated when the wiring of the battery is disconnected using the pyro-switch can be suppressed.

According to the second aspect of the present invention, the suppression unit (2) is composed of the diode (20), whereby it is only necessary to connect the cathode side (20a) of the diode (20) between the shunt resistor (100) and the load unit (for example, the motor M) and to connect the anode side (20b) to the load unit (for example, the motor M). Therefore, the suppression unit (2) can be configured with a simple circuit configuration.

### Brief Description of the Drawings

FIG. 1 is a conceptual block diagram showing a system according to an embodiment of the present invention.
FIG. 2A is a conceptual block diagram showing a part of the system according to the same embodiment, and in particular, showing a state after a pyro-switch is operated, and FIG. 2B is a conceptual block diagram showing a part of the system according to the same embodiment, and in particular, explaining a method for suppressing energy generated after the pyro-switch is operated.
FIG. 3 is a flowchart showing an example of use of the system according to the same embodiment.
FIG. 4 shows a conventional system, and FIG. 4A is a conceptual block diagram showing a state before a pyro-switch is operated, and FIG. 4B is a conceptual block diagram showing a state after the pyro-switch is operated. Description of the Embodiment

Hereinafter, an embodiment of a system according to the present invention will be specifically described with reference to the drawings. It is noted that, in the following description, when vertical and horizontal directions are indicated, it shall mean vertical and horizontal directions when viewed from the front of the figure. Further, the same members as those of the conventional system are denoted by the same signs and their detailed description will be omitted.

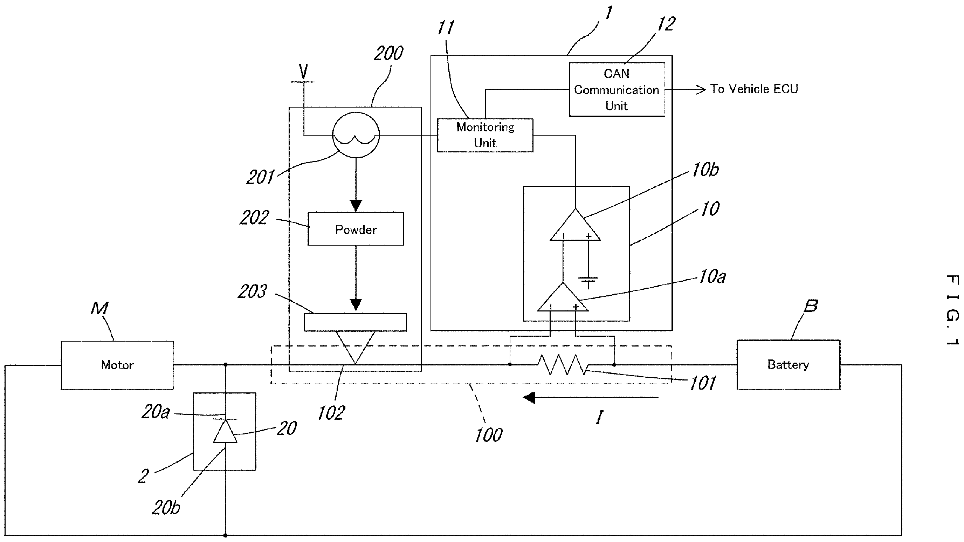

The system according to the present embodiment is composed of a current detection sensor 1, a suppression unit 2, a shunt resistor 100 provided between a battery B and a motor M and measuring the current value of current I flowing from the battery B to the motor M, and a pyro-switch 200 provided on a base material 102 of the shunt resistor 100, as shown in FIG. 1.

The current detection sensor 1 is composed of a threshold detection unit 10, a monitoring unit 11, and a CAN communication unit 12, as shown in FIG. 1. The threshold detection unit 10 is composed of an amplifier 10a for amplifying the current value of the current I flowing from the battery B to the motor M having been measured by the shunt resistor 100 and a comparator 10b for detecting whether or not the current value amplified by the amplifier 10a exceeds a preset threshold (for example, 2000A). The output of the comparator 10b and the heater ignition unit 201 of the pyro-switch 200 are electrically connected. Unlike the conventional case, the pyro-switch 200 is configured to operate by receiving a signal due to exceeding the preset threshold (for example, 2000A).

On the other hand, the monitoring unit 11 monitors the electrical connection state between the output of the threshold detection unit 10 (the comparator 10b) and the heater ignition unit 201 of the pyro-switch 200. Specifically, the monitoring unit 11 monitors whether or not the current output from the threshold detection unit 10 (the comparator 10b) flows to the heater ignition unit 201. This makes it possible to check whether or not there is a disconnection in the wiring between the output of the threshold detection unit 10 (the comparator 10b) and the heater ignition unit 201 of the pyro-switch 200. Thus, the content monitored by the monitoring unit 11 is output from the monitoring unit 11 to the CAN communication unit 12. The current output from the threshold detection unit 10 (the comparator 10b) is so small that the heater ignition unit 201 is not actuated.

On the other hand, the CAN communication unit 12 is a communication unit using a CAN (Controller Area Network) as a communication protocol, and receives the content output from the monitoring unit 11. The CAN communication unit 12 then transmits the received content to a vehicle ECU (Electronic Control Unit) controlling each part of the vehicle.

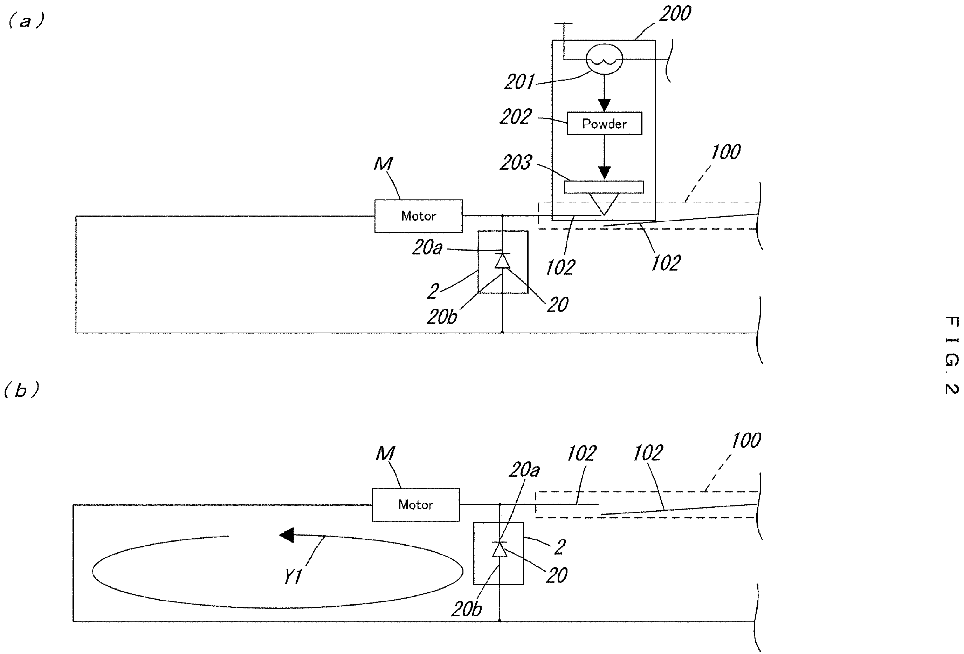

The suppression unit 2 suppresses energy generated by cutting the base material 102 of the shunt resistor 100 by a cutting unit 203 of the pyro-switch 200 (see FIG. 2). Specifically, as shown in FIG. 1, the suppression unit 2 is composed of a diode 20. The diode 20 has a cathode side 20a connected between the base material 102 of the shunt resistor 100 and the motor M and has an anode side 20b connected to the motor M.

Thus, the system configured as above is used as follows.

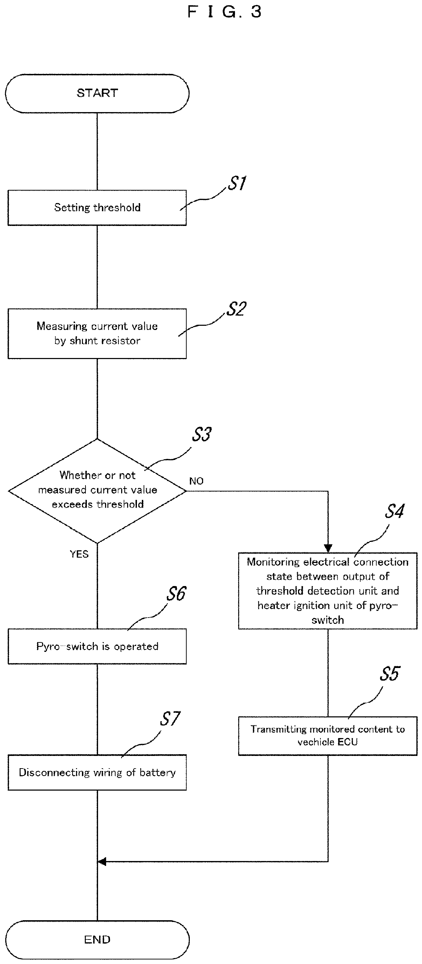

As shown in FIG. 3, first, a threshold (for example, 2000A) is set in the comparator 10b of the threshold detection unit 10 (step S1).

Next, when the current I (see FIG. 1) flows from the battery B to the motor M, the current value is measured by the shunt resistor 100 (step S2).

Next, the current value measured by the shunt resistor 100 is amplified by the amplifier 10a, and whether or not the amplified current value exceeds the preset threshold (for example, 2000A) is detected by the comparator 10b (step S3).

When the threshold is not exceeded (step S3: NO), the electrical connection state between the output of the threshold detection unit 10 (the comparator 10b) and the heater ignition unit 201 of the pyro-switch 200 is monitored by the monitoring unit 11 (step S4). The content monitored by the monitoring unit 11 is output from the monitoring unit 11 to the CAN communication unit 12 and received by the CAN communication unit 12. As a result, the monitored content is transmitted from the CAN communication unit 12 to the vehicle ECU (step S5).

Thus, this can solve the conventional problem. That is, in the conventional case, the pyro-switch 200 is configured to be operated, triggered by a signal from the airbag control device as shown in FIG. 4. Therefore, if there is a break in the wiring between the heater ignition unit 201 and the signal from the airbag control device, since the signal from the airbag control device cannot be received, there is a problem that the pyro-switch 200 does not operate, and thus, the wiring of the battery B cannot be disconnected safely. Further, there is a problem that such a state cannot be detected.

In this regard, as shown in the present embodiment, the electrical connection state between the output of the threshold detection unit 10 (the comparator 10b) and the heater ignition unit 201 of the pyro-switch 200 is monitored by the monitoring unit 11 and transmitted to the vehicle ECU through the CAN communication unit 12, whereby the electrical connection state can be constantly monitored. Accordingly, it is possible to check whether or not there is a break in the wiring between the output of the threshold detection unit 10 (the comparator 10b) and the heater ignition unit 201 of the pyro-switch 200. This can solve the problem that the pyro-switch 200 does not operate without noticing the occurrence of a break as in the conventional case, and thus the wiring of the battery B can be disconnected more safely. Further, the occurrence of a break in the vehicle ECU can be detected at an early stage by transmitting the monitored content to the vehicle ECU that controls each part of the vehicle, and thus, the occurrence of a problem can be notified at an early stage.

On the other hand, when the threshold is exceeded (step S3: YES), a signal indicating that the threshold has been exceeded is output from the threshold detection unit 10 (the comparator 10b), and the signal is thus received by the heater ignition unit 201. In response thereto, the heater ignition unit 201 is actuated. As a result, powder 202 explodes, and the exploded powder 202 causes the cutting unit 203 to operate (step S6). When the cutting unit 203 is operated, the base material 102 of the shunt resistor 100 is cut by the cutting unit 203 as shown in FIG. 2A, so that the wiring of the battery B is disconnected (step S7).

Thus, in this manner, when the pyro-switch 200 is configured to be operated when the current value measured by the shunt resistor 100 exceeds the threshold, the conventional problem can be solved. That is, in the conventional case, as shown in FIG. 4, the pyro-switch 200 is operated when receiving a signal from the airbag control device even when damage such as a disconnection or a short circuit of the wiring of the battery B does not occur at the time of a vehicle accident, so that the base material 102 of the shunt resistor 100 is cut. As a result, there is a problem that electric power is no longer supplied to the motor M, etc., due to the loss of the entire power source supplied from the battery B, whereby, for example, the door of the vehicle can no longer be opened and thus an occupant cannot get out of the vehicle.

In this regard, as shown in the present embodiment, when the pyro-switch 200 is configured to be operated when the current value measured by the shunt resistor 100 exceeds the threshold, it is no longer possible to operate the pyro-switch 200 when there is no damage such as a disconnection or a short circuit of the wiring of the battery B (if there is no damage such as a disconnection or a short circuit of the wiring of the battery B, the threshold (for example, 2000A) is never exceeded). Therefore, the problem that electric power is no longer supplied to the motor M, etc., due to the loss of the entire power source supplied from the battery B, whereby, for example, the door of the vehicle can no longer be opened and an occupant cannot get out of the vehicle can be solved.

Further, as shown in the present embodiment, since the current detection sensor 1 (the threshold detection unit 10) detects that the current value measured by the shunt resistor 100 has exceeded the threshold, the current detection sensor 1 (the threshold detection unit 10) is located in the vicinity of the shunt resistor 100, and the shunt resistor 100 is cut by the pyro-switch 200, so that the pyro-switch 200 is located in the vicinity of the shunt resistor 100. Accordingly, the current detection sensor 1 (the threshold detection unit 10) is provided in the vicinity of the pyro-switch 200. As a result, signal wiring indicating that the current value measured by the shunt resistor 100 has exceeded the threshold is located in the vicinity of the pyro-switch 200. Thus, the situation where the signal from the airbag control device (see FIG. 4) is damaged at the time of a vehicle accident as in the conventional case can be reduced. Accordingly, the situation where the pyro-switch 200 is no longer operated and then the wiring of the battery B cannot be disconnected safely as in the conventional case can be reduced.

Thus, according to the present embodiment, the wiring of the battery B can be disconnected more safely using the pyro-switch 200.

Incidentally, as shown in FIG. 4B, there is a problem that when the base material 102 of the shunt resistor 100 is cut by the pyro-switch 200 to disconnect the wiring of the battery B, energy stored in the inductance of the wiring and the components of the battery B may cause a high voltage, resulting in sparks, and leading to destruction and burnout of the battery B and peripheral devices.

Accordingly, in the present embodiment, the suppression unit 2 for suppressing energy generated by cutting the base material 102 of the shunt resistor 100 by the cutting unit 203 of the pyro-switch 200 (see FIG. 2) is provided. That is, when the base material 102 of the shunt resistor 100 is cut by the cutting unit 203 as shown in FIG. 2A, triggered by a signal output from the threshold detection unit 10 (the comparator 10b) and indicating that the threshold is exceeded, the energy stored in the inductance of the wiring and the components of the battery B causes a high voltage on the motor M side. Therefore, the current I flows back in the direction of arrow Y1 as shown in FIG.2B by providing the suppression unit 2 on the motor M side. As a result, the energy generated by cutting the base material 102 of the shunt resistor 100 by the cutting unit 203 of the pyro-switch 200 (see FIG. 2) can be suppressed. Thus, according to the present embodiment, the situation where the energy stored in the inductance of the wiring and the components of the battery B causes a high voltage, resulting in sparks, and leading to destruction and burnout of the battery B and peripheral devices as in the conventional case can be reduced. As a result, the system itself shown in the present embodiment can be protected.

Thus, according to the present embodiment, the energy generated when the wiring of the battery B is disconnected using the pyro-switch 200 can be suppressed.

Further, the suppression unit 2 is composed of the diode 20, whereby it is only necessary to connect the cathode side 20a of the diode 20 between the base material 102 of the shunt resistor 100 and the motor M and to connect the anode side 20b to the motor M. Therefore, the suppression unit 2 can be configured with a simple circuit configuration.

It is noted that the current detection sensor 1 shown in the present embodiment is merely an example, and various modifications and changes can be made within the scope of the gist of the present invention described in the claims. For example, although the example in which the threshold detection unit 10 is composed of the amplifier 10a and the comparator 10b is shown, the present invention is not limited thereto, and the threshold detection unit 10 may be composed only of the comparator 10b. Further, the threshold detection unit 10 may have any circuit configuration as long as it compares the current value of the current I flowing from the battery B to the motor M having been measured by the shunt resistor 100 with the preset threshold (for example, 2000A).

Further, in the present embodiment, the example in which the current value of the current I flowing from the battery B to the motor M is measured by the shunt resistor 100 is shown, but the present invention is not limited thereto, and it may be configured to measure, by the shunt resistor 100, the current value of current flowing from the battery B to other load units other than the motor M.

On the other hand, in manufacturing, the current detection sensor 1 and the pyro-switch 200 may be manufactured separately or may be manufactured integrally. When manufactured integrally, they can be made compact and the installation space can be reduced.

Still on the other hand, in the present embodiment, as a trigger for operating the pyro-switch 200, the signal due to exceeding the preset threshold (for example, 2000A) is used as the trigger. However, a signal from the airbag control device may be used together with the signal.

Yet on the other hand, the suppression unit 2 can be applied also to the conventional system shown in FIG. 4 in addition to the system described above.

### Reference Signs List

- 1: Current Detection Sensor
- 2: Suppression Unit
- 10: Threshold Detection Unit
- 11: Monitoring Unit
- 12: CAN Communication Unit
- 20: Diode
- 20a: Cathode Side
- 20b: Anode Side
- 100: Shunt Resistor
- 200: Pyro-switch
- B: Battery
- M: Motor (Load Unit)

## Claims

1. A protection system including
a shunt resistor (100) for measuring a value of current flowing from a battery (B) to a load unit (M);
a current detection sensor (1) composed of a threshold detection unit (10), a monitoring unit (11) and a CAN communication unit (12);
a pyro-switch (200) for cutting the shunt resistor (100) based on a predetermined signal; and
a suppression unit (2) connected between the shunt resistor (100) and the load unit (M);
wherein the suppression unit (2) suppresses energy generated by cutting the shunt resistor (100) by the pyro-switch (200);
the pyro-switch (200) comprising a heater ignition unit (201);
the monitoring unit (11) being configured to monitor the electrical connection state between an output of the threshold detection unit (10) and the heater ignition unit (201) and to transmit the electrical connection state through the CAN communication unit (12) to a vehicle ECU.

2. The protection system according to claim 1, wherein
the suppression unit (2) is composed of a diode (20), and
the diode (20) has a cathode side (20a) connected between the shunt resistor (100) and the load unit (M), and
the diode (20) has an anode side (20b) connected to the load unit (M).

## Patentansprüche

1. Schutzsystem, das Folgendes einschließt
einen Shunt-Widerstand (100) zum Messen eines Werts von Strom, der von einer Batterie (B) zu einer Lasteinheit (M) fließt;
einen Stromerfassungssensor (1), der aus einer Schwellenwerterfassungseinheit (10), einer Überwachungseinheit (11) und einer CAN-Kommunikationseinheit (12) besteht;
einen Pyroschalter (200) zum Abtrennen des Shunt-Widerstands (100) auf der Grundlage eines vorbestimmten Signals; und
eine Unterdrückungseinheit (2), die zwischen dem Shunt-Widerstand (100) und der Lasteinheit (M) angeschlossen ist;
wobei die Unterdrückungseinheit (2) Energie unterdrückt, die durch das Abtrennen des Shunt-Widerstands (100) durch den Pyroschalter (200) erzeugt wird;
wobei der Pyroschalter (200) eine Heizungszündeinheit (201) umfasst;
wobei die Überwachungseinheit (11) konfiguriert ist zum Überwachen des elektrischen Verbindungszustands zwischen einer Ausgabe der Schwellenwerterfassungseinheit (10) und der Heizungszündeinheit (201) und zum Übertragen des elektrischen Verbindungszustands über die CAN-Kommunikationseinheit (12) an eine Fahrzeug-ECU.

2. Schutzsystem nach Anspruch 1, wobei
die Unterdrückungseinheit (2) aus einer Diode (20) besteht, und
die Diode (20) eine Kathodenseite (20a) aufweist, die zwischen dem Shunt-Widerstand (100) und der Lasteinheit (M) angeschlossen ist, und
die Diode (20) eine Anodenseite (20b) aufweist, die mit der Lasteinheit (M) verbunden ist.

## Revendications

1. Système de protection comportant
une résistance (100) shunt destinée à la mesure d'une valeur de courant circulant depuis une batterie (B) vers une unité de charge (M) ;
un capteur (1) de détection de courant composé d'une unité (10) de détection de seuil, d'une unité de surveillance (11) et d'une unité (12) de communication CAN ;
un pyrocommutateur (200) destiné à la coupure de la résistance (100) shunt en fonction d'un signal prédéterminé ; et
une unité de suppression (2) reliée entre la résistance (100) shunt et l'unité de charge (M) ;
dans lequel l'unité (2) de suppression supprime de l'énergie générée par la coupure de la résistance (100) shunt par le pyrocommutateur (200) ;
le pyrocommutateur (200) comprenant une unité (201) d'allumage d'appareil de chauffage ;
l'unité de surveillance (11) étant configurée pour surveiller l'état de la connexion électrique entre une sortie de l'unité (10) de détection de seuil et l'unité (201) d'allumage d'appareil de chauffage et pour transmettre l'état de la connexion électrique, au moyen de l'unité (12) de communication CAN, à une ECU de véhicule.

2. Système de protection selon la revendication 1, dans lequel
l'unité (2) de suppression est composée d'une diode (20), et
la diode (20) a un côté (20a) formant cathode relié entre la résistance (100) shunt et l'unité de charge (M), et
la diode (20) a un côté (20b) formant anode relié à l'unité de charge (M).
